# EUROPEAN PATENT SPECIFICATION

(11) **EP 1 214 204 B1**
(45) Date of publication and mention of the grant of the patent: **11.02.2004**
(21) Application number: 99948116.1
(22) Date of filing: 03.09.1999
(51) Int. Cl.: B60C 11/01, B60C 3/04, B60C 13/00, B60C 13/02, B60C 9/06

(54) **FARM IMPLEMENT TIRE**
ACKERSCHLEPPERREIFEN
PNEU POUR MACHINES AGRICOLES

(43) Date of publication of application: 19.06.2002
(73) Proprietor: THE GOODYEAR TIRE & RUBBER COMPANY, Akron, Ohio 44316-0001 (US)
(72) Inventor: BONKO, Mark, Leonard, Uniontown, OH 44685 (US)
(74) Representative: Kutsch, Bernd
(86) International application number: PCT/US1999/020272
(87) International publication number: WO 2001/017801

(56) References cited:
- GB-A- 785 097
- GB-A- 1 433 410
- GB-A- 1 588 644
- US-A- 3 811 488
- US-A- 3 825 052

## Description

### Technical Field

This invention relates to a pneumatic agricultural tire. More particularly to a farm implement tire.

### Background Invention

Farm implement tires are commonly found on equipment used in planting seeds or spraying fertilizer and such.

These pieces of equipment are often pulled behind a tractor.

In the case of seeding equipment, the numerous rows of a field are each fed seeds at fixed intervals at spaced locations aligned with a crop row. Each location has a complete mechanism to feed a seed at the fixed intervals as the tractor moves. These mechanisms, although fairly durable, are prone to jamming due to vibrational inputs from the tires. Accordingly, most of the equipment uses pneumatic tires under inflation. The inflated tires act as a spring dampening system.

The use of solid or rigid tires has been avoided because the equipment would require a more complex suspension.

The main problem encountered in the use of pneumatic tires has been flats caused by stubble damage. These problems are increased when no-till farming is used to prevent soil erosion. The no-till fields can have a large number of stalks that are protruding out of the ground, the stalks often are cut at a biased angle creating sharp edges that cut tires.

GB-A- 1 588 644 considered closest prior art, discloses a tire having the features enumerated in the preamble of claim 1.

It is an object of the invention to provide a stubble damage resistant pneumatic tire having a unique cross-sectional profile wherein the sidewall is protected by the tread and a shoulder buttress.

### Summary of the Invention

The invention provides a pneumatic agricultural tire as defined in the appended claims.

### Definitions

"Aspect Ratio" means the ratio of its section height to its section width.

"Axial" and "axially" means the lines or directions that are parallel to the axis of rotation of the tire.

"Bead" or "Bead Core" means generally that part of the tire comprising an annular tensile member, the radially inner beads are associated with holding the tire to the rim being wrapped by ply cords and shaped, with or without other reinforcement elements such as flippers, chippers, apexes or fillers, toe guards and chafers, the bead or beads under the tread being encapsulated in tread rubber can be with or without other cord reinforced fabric elements.

"Belt Structure" or "Reinforcing Belts" means at least two annular layers or plies of parallel cords, woven or unwoven, underlying the tread, unanchored to the bead, and having both left and right cord angles in the range from 17° to 27° with respect to the equatorial plane of the tire.

"Bias Ply Tire" means that the reinforcing cords in the carcass ply extend diagonally across the tire from bead-to-bead at about a 25-65° angle with respect to the equatorial plane of the tire, the ply cords running at opposite angles in alternate layers.

"Carcass" means a laminate of tire ply material and other tire components cut to length suitable for splicing, or already spliced, into a cylindrical or toroidal shape. Additional components may be added to the carcass prior to its being vulcanized to create the molded tire.

"Circumferential" means lines or directions extending along the perimeter of the surface of the annular tread perpendicular to the axial direction.

"Design Rim" means a rim having a specified configuration and width. For the purposes of this specification, the design rim and design rim width are as specified by the industry standards in effect in the location in which the tire is made. For example, in the United States, the design rims are as specified by the Tire and Rim Association. In Europe, the rims are as specified in the European Tyre and Rim Technical Organization--Standards Manual and the term design rim means the same as the standard measurement rims. In Japan, the standard organization is The Japan Automobile Tire Manufacturer's Association.

"Design Rim Width" is the specific commercially available rim width assigned to each tire size and typically is between 75% and 90% of the specific tire's section width.

"Equatorial Plane (EP)" means the plane perpendicular to the tire's axis of rotation and passing through the center of its tread.

"Footprint" means the contact patch or area of contact of the tire tread with a flat surface at zero speed and under normal load and pressure.

"Inner" means toward the inside of the tire and "outer" means toward its exterior.

"Lateral Edge" means the axially outermost edge of the tread as defined by a plane parallel to the equatorial plane and intersecting the outer ends of the axially outermost traction lugs at the radial height of the inner tread surface.

"Leading" refers to a portion or part of the tread that contacts the ground first, with respect to a series of such parts or portions, during rotation of the tire in the direction of travel.

"Net-to-gross Ratio" means the ratio of the surface are of the normally loaded and normally inflated tire tread rubber that makes contact with a hard flat surface, divided by the total area of the tread, including noncontacting portions such as grooves as measured around the entire circumference of the tire.

"Normal Inflation Pressure" means the specific design inflation pressure and load assigned by the appropriate standards organization for the service condition for the tire.

"Normal Load" means the specific design inflation pressure and load assigned by the appropriate standards organization for the service condition for the tire.

"Radial" and "radially" mean directions radially toward or away from the axis of rotation of the tire.

"Radial Ply Tire" means a belted or circumferentially-restricted pneumatic tire in which the ply cords which extend from bead to bead are laid at cord angles between 65° and 90° with respect to the equatorial plane of the tire.

"Section Height" (S_{H}) means the radial distance from the nominal rim diameter to the outer diameter of the tire at its equatorial plane.

"Section Width" (S_{W}) means the maximum linear distance parallel to the axis of the tire and between the exterior of its sidewalls when and after it has been inflated at normal pressure for 24 hours, but unloaded, excluding elevations of the sidewalls due to labeling, decoration or protective bands, or in this particular tire any portion of the tread.

"Tire Design Load" is the base or reference load assigned to a tire at a specific inflation pressure and service condition; other load-pressure relationships applicable to the tire are based upon that base or reference.

"Trailing" refers to a portion or part of the tread that contacts the ground last, with respect to a series of such parts or portions during rotation of the tire in the direction of travel.

"Tread Arc Width" (T_{AW}) means the width of an arc having its center located on the plane (EP) and which substantially coincides with the radially outermost surfaces of the various traction elements (lugs, blocks, buttons, ribs, etc.) across the lateral or axial width of the tread portions of a tire when the tire is mounted upon its designated rim and inflated to its specified inflation pressure but not subject to any load.

"Tread Width" means the arc length of the tread surface in the axial direction, that is, in a plane parallel to the axis of rotation of the tire.

"Unit Tread Pressure" means the radial load borne per unit area (square centimeter or square inch) of the tread surface when that area is in the footprint of the normally inflated and normally loaded tire.

### Detailed Description of the Invention

The following is a brief description of the drawings in which like parts bear like reference numerals and in which:
FIGURE 1 is a perspective view of the tire (10);
FIGURE 2 is a fragmentary view of the tire (10) shown in a perspective;
FIGURE 3 is a cross-sectional view of the tire (10) in an uninflated as mold condition;
FIGURE 4 is a cross-sectional view of the tire (10) in an inflated condition shown mounted on a rim (30).

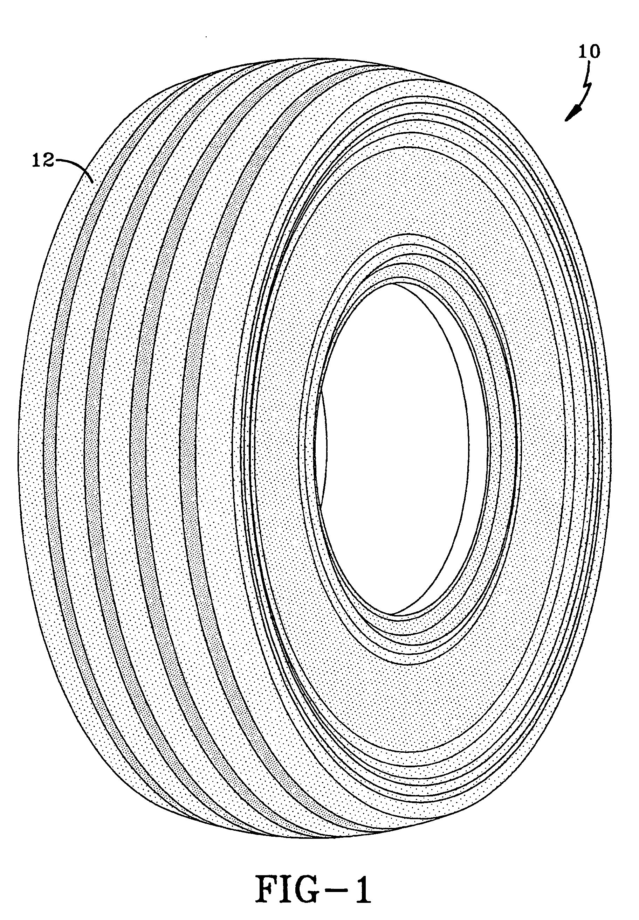

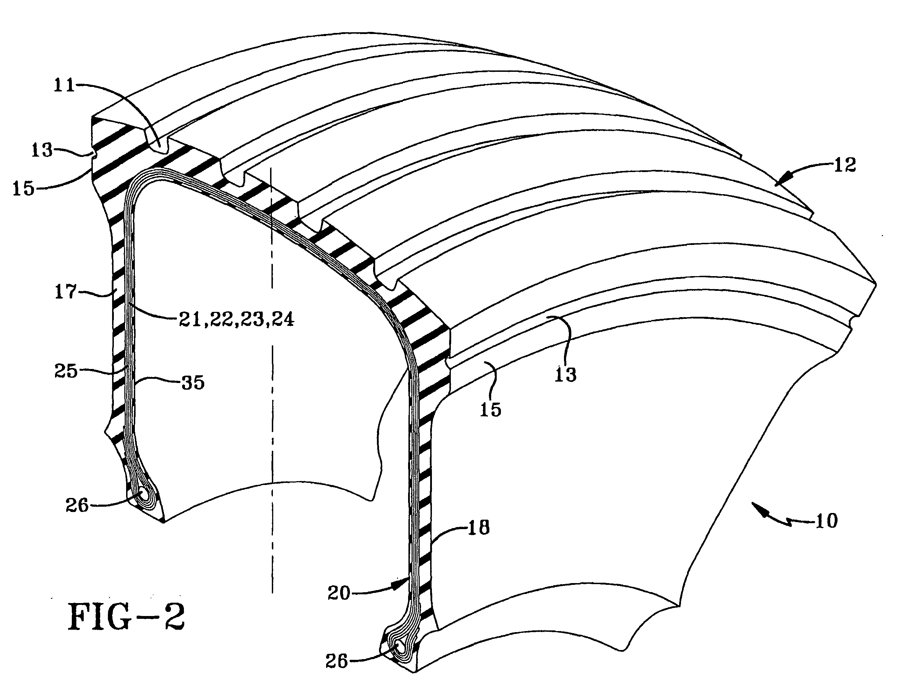

As can be seen in FIGURES 1 through 3, the tire (20) has a unique molded shape.

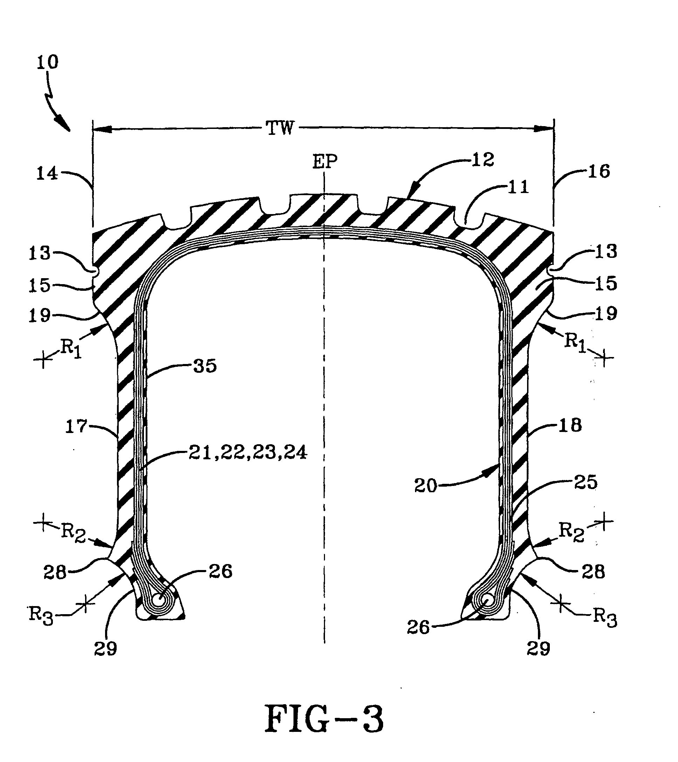

With references to FIGURE 3, the tire (10) as shown in a cross-sectional view has a tread (12), the tread (12) has a plurality of circumferentially extending grooves (11). At the lateral extremes of the tread (12) are a pair of lateral tread edges (14, 16). The distance between the lateral tread edges defines the tread width (T_{w}).

At each lateral edges (14, 16) of the tread (12) is a radially inwardly extending tread buttress (15). Each of the tread buttress (15) has an annular groove (13) located about midway along an exterior surface of the buttress (15). The buttress (15) further exhibits a radial inner concavity or annular groove (19) defined by a single radius of curvature R₁, the groove (19) extending from the exterior surface of the buttress (15) to a first or second sidewall (17, 18) of the tire (10). For purposes of this invention the tread buttress, including the groove (19), are considered part of the radially outer tread (12) and not part of the sidewalls (17, 18).

Radially inward of the tread (12) is a cord-reinforced carcass (20). The carcass (20) preferably has a plurality of carcass plies (21, 22, 23, 24) reinforced by cords (25). The cords (25) of the radially inner first ply (21) are oriented preferably on a bias angle with the cords of the second ply (22) radially outward of the first ply (21) being oriented substantially equally but oppositely relative to the cords (25) of the first plies. Similarly the cords (25) of the third and fourth plies (23, 24), if such plies are employed, can be similarly oriented equally but oppositely as is the conventional practice in carcass having bias plies. As shown, each of the plies can be wrapped about annular bead cores (26) as shown and this secures the plies as in a common practice in the manufacture of tires.

The carcass (20) as shown has no belt or breaker reinforcing structure, although one may be employed if so desired between the tread (12) and the plies (21, 22, 23, 24).

As shown radially outward of the carcass plies (21, 22, 23, 24) and extending between the beads (26) and the tread buttress (15) are the rubber portions of the sidewalls (17, 18) of the tire (10). As shown, the sidewalls (17, 18) have a reasonable thickness of rubber material to absorb the impacts of the stubble. Radially inward of the plies (21, 22, 23,24) can be an air imperious liner (35) as shown. In the lower portion of the sidewalls (17,18) is an annular projection (28). The projection (28) has a radius of curvature R₂ that blends into the exterior surface of the sidewalls (17, 18), each sidewall as molded is generally flat or straight and axially inward of the groove (19) and projection (28) as illustrated in FIGURE 3.

Radially inward of the projection (28) is a concave rim flange contacting surface (29), the surface (29) having a radius of curvature R₃. The curvature R₃ preferable is about equal to or slightly greater than the curvature of the rim flange to which the tire is to be mounted.

As one will readily appreciate the sidewalls (17, 18) as molded are axially inward of the tread buttress (15) and the projection (28) by an amount at least half the total thickness of the sidewalls (17, 18). The plies as shown are substantially molded flat in this region of the tire sidewalls (17, 18).

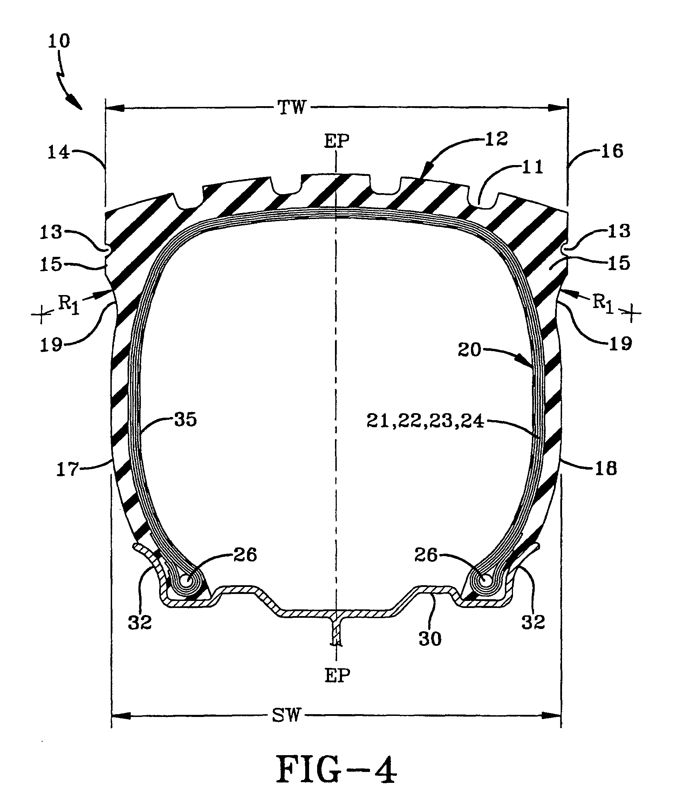

The tire (10) when mounted on its design rim (30) and inflated to a normal operating pressure exhibits the cross-sectional shape as illustrated in FIGURE 4.

As shown, the maximum width (S_{w}) of the tire (10) as measured along the exterior surfaces of the sidewalls (17,18) is defined as the tire's maximum section width (S_{w}).

Interestingly the plies (21, 22, 23, 24) when subjected to inflation curved or bow outwardly such that the annular projection (28) and its radius R₂ are almost imperceptibly in the region of the rim flange (32).

The cord (25) being on a bias angle constrain the outward movement of the sidewalls (17, 18). Preferably the exterior surfaces of the sidewalls (17, 18) at their maximum axial width (S_{w}), are less than the tread width (T_{w}) as measured at the lateral edges (14, 16) when the tire is inflated as shown.

When this relationship is established such that the tread (12) has a buttress (15) that is actual equal to or wider than the tire's sidewalls (17, 18), then as the tire (10) rolls over the soil the stubble is deflected first by the tread buttress before it can contact the tire's sidewalls (17, 18).

This feature alone insures that the stubble has a difficult time in contacting the sidewalls (17, 18) with a spear like impact In fact, the tread (12) actually pins or captures most stubble that would have a length sufficient to impact the sidewalls (17, 18) under the tread's contact patch as the tire (10) rolls through the field.

While the concept presented above appears simple, in fact the idea to mold the tires sidewalls so that they are axially inward of both the tread (12) and with a lower rim projection (28) is very unique, particularly when one considers that the region of the sidewalls (17, 18) are molded substantially flat with the precise intention that the resultant tire has an outwardly curved sidewall when inflated, but limited in curvature so as not to exceed the tread width.

This feature enables the tire (10) to act more like a conventional tire in that no radical ply inserts or patches are used that would produce undue stress on the carcass when the tire is inflated. Furthermore, the profile of the tire is such that the amount of overhang created by the tread (12) at the buttress (15) is almost imperceptible. Nevertheless, the tread over the structure create a design that virtually eliminates damage caused by stubble.

While the tire (10) is shown as a farm implement tire design, it should be easily appreciated that such a structure would also provide sizeable advantages on tires for large mower decks, utility vehicles, golf carts, and lawn and garden tractors and mowers as well as pneumatic wheelbarrel tires and almost any tire where stubble damage is a concern.

## Claims

1. A pneumatic agricultural tire (10) having a carcass (20) having two or more bias plies (21, 22, 23, 24), the first ply (21) having cords (25) oriented substantially equally but opposite relative to cords (25) of the second bias ply (22), and a radially outer tread (12) having a tread width (T_{w}) and a pair of radially inwardly extending sidewalls (17, 18), the outer surface of the sidewalls (17, 18) defining the tires section width (Sw), the tire (10) when normally inflated and mounted on a rim (30) has a tread width (T_{w}) greater than or equal to the maximum section width (S_{w}) of the tire (10), the tire being **characterized by**: the tire (10) being an implement tire with the tread (12) having a plurality of circumferentially extending grooves (11) and wherein each sidewall (17,18) adjacent to the tread has an annular concavity (19).

2. The pneumatic agriculture tire (10) of claim I wherein the annular concavity (19) is defined by a single radius of curvature R₁.

3. The pneumatic agricultural tire (10) of claim 1 wherein interposed between the tread (12) and sidewall (17,18) is a annular shoulder buttress 15 extending radially inward of the tread (12) and outward of the carcass plies (21, 22, 23, 24).

4. The pneumatic agricultural tire of claim 1 wherein the shoulder buttress (15) has a outer surface **characterized by** an annular groove (13).

## Patentansprüche

1. Landwirtschaftlicher Luftreifen (10) mit einer Karkasse (20), die zwei oder mehr Diagonallagen (21, 22, 23, 24) aufweist, wobei die erste Lage (21) Korde (25) aufweist, die im Wesentlichen gleich aber entgegengesetzt relativ zu den Korden (25) der zweiten Diagonallage (22) orientiert sind, und mit einem radial äußeren Laufstreifen (12) mit einer Laufstreifenbreite (Tw) und einem Paar sich radial nach innen erstreckender Seitenwände (17, 18), wobei die äußere Oberfläche der Seitenwände (17, 18) die Schnittbreite (S_{W}) des Reifens definiert, und der Reifen (10), wenn er normal aufgepumpt und auf eine Felge (30) aufgezogen ist, eine Laufstreifenbreite (T_{W}) aufweist, die größer als oder gleich wie die maximale Schnittbreite (S_{W}) des Reifens (10) ist, wobei der Reifen **dadurch gekennzeichnet ist, dass** er ein Gerätereifen ist, bei dem der Laufstreifen (12) eine Vielzahl von sich in Umfangsrichtung erstreckenden Rillen (11) aufweist, und worin jede Seitenwand (17, 18) benachbart zum Laufstreifen eine ringförmige Einbuchtung (19) aufweist.

2. Landwirtschaftlicher Luftreifen (10) nach Anspruch 1, worin die ringförmige Einbuchtung (19) durch einen einzigen Krümmungsradius R₁ definiert ist.

3. Landwirtschaftlicher Luftreifen (10) nach Anspruch 1, worin zwischen dem Laufstreifen (12) und der Seitenwand (17, 18) eine ringförmige Schulterzone 15 eingefügt ist, die sich radial innerhalb des Laufstreifens (12) und außerhalb der Kärkasslagen (21, 22, 23, 24) erstreckt.

4. Landwirtschaftlicher Luftreifen nach Anspruch 1, worin die Schulterzone (15) eine äußere Oberfläche aufweist, die durch eine ringförmige Rille (13) gekennzeichnet ist.

## Revendications

1. Bandage pneumatique agricole (10) possédant une carcasse (20) comportant deux nappes diagonales ou plus (21, 22, 23, 24), la première nappe (21) possédant des câblés (25) présentant une orientation essentiellement égale mais opposée par rapport à celle des câblés (25) de la deuxième nappe diagonale (22), et une bande de roulement externe en direction radiale (12) possédant une largeur de bande de roulement (Tw) et une paire de flancs s'étendant en direction radiale vers l'intérieur (17, 18), la surface externe des flancs (17, 18) définissant la grosseur du boudin du bandage pneumatique (Sw), le bandage pneumatique (10), lorsqu'il est normalement gonflé et lorsqu'il est monté sur une jante (30) possédant une largeur de bande de roulement (Tw) supérieure ou égale à la grosseur du boudin maximale (Sw) du bandage pneumatique (10), le bandage pneumatique étant **caractérisé par le fait que** le bandage pneumatique (10) est un bandage pneumatique pour machines agricoles, dont la bande de roulement (12) possède plusieurs rainures (11) s'étendant en direction circonférentielle et dont chaque flanc (17, 18) adjacent à la bande de roulement possède une concavité annulaire (19).

2. Bandage pneumatique agricole (10) selon la revendication 1, dans lequel la concavité annulaire (19) est définie par un rayon de courbure unique R1.

3. Bandage pneumatique agricole (10) selon la revendication 1, dans lequel un contrefort (15) en forme d'épaulement annulaire s'étendant à l'intérieur de la bande de roulement (12) en direction radiale et à l'extérieur des nappes de carcasse (21, 22, 23, 24) est intercalé entre la bande de roulement (12) et les flancs (17, 18).

4. Bandage pneumatique agricole (10) selon la revendication 1, dans lequel le contrefort (15) en forme d'épaulement possède une surface externe **caractérisée par** une rainure annulaire (13).
